# EUROPÄISCHE PATENTSCHRIFT

(11) **EP 3 612 131 B1**
(45) Veröffentlichungstag und Bekanntmachung des Hinweises auf die Patenterteilung: **16.08.2023**
(21) Anmeldenummer: 18720183.5
(22) Anmeldetag: 18.04.2018
(51) Int. Cl.: A61C 13/00, A61C 13/01, A61C 13/08, A61C 13/10

(54) **VERFAHREN ZUR HERSTELLUNG EINER DENTALPROTHESE MIT PARALLELEN WURZELN DER PROTHESENZÄHNE**
METHOD FOR PRODUCING A DENTAL PROSTHESIS HAVING PARALLEL ROOTS OF THE PROSTHETIC TEETH
PROCÉDÉ DE FABRICATION D'UNE PROTHÈSE DENTAIRE À RACINES PARALLÈLES DES DENTS DE LA PROTHÈSE

(30) Priorität: 21.04.2017 DE 102017108592
(43) Veröffentlichungstag der Anmeldung: 26.02.2020
(73) Patentinhaber: Kulzer GmbH, 63450 Hanau (DE)
(72) Erfinder: RUPPERT, Klaus, 63477 Maintal (DE); DEKERT, Stephan, 61273 Wehrheim/Obernhain (DE)
(74) Vertreter: Schultheiss & Sterzel Patentanwälte PartG mbB
(86) Internationale Anmeldenummer: PCT/EP2018/059888
(87) Internationale Veröffentlichungsnummer: WO 2018/192966

(56) Entgegenhaltungen:
- DE-B3-102014 118 231
- US-A1- 2015 066 181

## Beschreibung

Die Erfindung betrifft ein Verfahren zur Herstellung einer Dentalprothese, wobei die Dentalprothese eine Prothesenbasis und mehrere Prothesenzähne aufweist, wobei das Verfahren unter Anwendung eines virtuellen dreidimensionalen Dentalprothesen-Modells der zu erzeugenden physischen Dentalprothese erfolgt.

Die Erfindung betrifft auch eine Dentalprothese hergestellt mit einem solchen Verfahren und eine Vorrichtung oder Kombination von Vorrichtungen zum Durchführen eines solchen Verfahrens.

Der derzeit gängige Weg ist die analoge Erstellung von Dentalprothesen. Zur Herstellung der Prothesenbasis wird dazu derzeit meist ein analoges Verfahren verwendet, bei dem zunächst ein Abdruck des zahnlosen Kiefers des Patienten genommen wird. Aus diesem Abdruck wird ein Gipsmodell der Patientensituation gefertigt.

Zur Herstellung der Dentalprothese werden Prothesenzähne manuell und einzeln auf einer Wachsbasis auf dem Gipsmodell des unbezahnten Kiefers aufgestellt. Bei der Aufstellung der konfektionierten Zähne werden diese der jeweiligen Mundsituation des Patienten vom Zahntechniker angepasst und gegebenenfalls auch vom Zahnarzt bei der Einprobe korrigiert.

Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis aus der Form heraus zu lösen, um einen Hohlraum für den Prothesenkunststoff zu schaffen. Die Prothesenzähne verbleiben dabei meist im Einbettmaterial. Ein entsprechender Kunststoff wird in den Hohlraum injiziert oder gegossen, dadurch erhält man nach der Aushärtung des Kunststoffs die Dentalprothese.

Nach Aushärtung des Kunststoffs wird dieser nachbearbeitet, um die gewünschte Oberflächengüte zu erhalten.

Neben handwerklichen Techniken gewinnen digitale Fertigungsmethoden im Dentalbereich immer mehr an Bedeutung. Zahnersatz, wie zum Beispiel Kronen und Brücken, wird seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion).

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Ferner gewinnen generative CAM-Verfahren wie SLM (Selective Laser Melting) zur Herstellung von Kronen, Brücken und Modellen sowie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbissschienen, Bohrschablonen oder Dentalmodellen immer mehr an Bedeutung. Dabei ist die Herstellung von Zahnersatz auf Acrylatbasis mittels RP-Verfahren (Rapid-Prototyping-Verfahren) bisher immer noch starken Einschränkungen unterworfen. Mehrfarbiger Zahnersatz oder Zahnersatz aus verschiedenen Polymer-Materialien (zum Beispiel für Schmelz- und Dentinmassen) zur Herstellung von hochwertigem und ästhetischem Zahnersatz ist bisher nur mittels aufwendiger RP-Maschinen mit mehreren Materialkammern oder mittels Klebe- und Fügetechniken herstellbar.

Ebenso ist die Herstellung von Materialkombinationen (zum Beispiel Legierungen und Polymere) mittels RP-Verfahren bisher sehr aufwendig und nicht in Serienreife umgesetzt. Die generative Herstellung von ästhetisch anspruchsvollen Konfektionszähnen für Teil- oder Totalprothesen ist derzeit nicht möglich, da mittels Stereolithographie nur ein Material beziehungsweise eine Farbe gedruckt werden kann. Das Drucken von mehrfarbigen Konfektionszähnen ist derzeit nicht möglich. Aus diesem Grund wird die Prothesenbasis mittels CAM-Verfahren (beispielsweise Fräsen oder Drucken) hergestellt und vorkonfektionierte Prothesenzähne werden mit der Prothesenbasis verklebt. Hierbei kann die Prothesenbasis sowohl durch generative Verfahren (SLA, DLP, FDM, etc.) als auch durch subtraktive Verfahren (Fräsen und dergleichen) hergestellt werden. Die künstlichen Prothesenzähne können sowohl als Einzelzähne als auch als komplette Zahnreihen hergestellt und mit der Prothese verklebt werden.

Es gibt bereits erste Verfahren, wie beispielsweise die aus der DE 10 2009 056 752 A1 oder der WO 2013 124 452 A1 bekannten Verfahren, bei denen eine dentale Teil- beziehungsweise Totalprothese digital aufgestellt und über CAD/CAM-Verfahren produziert wird. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert. Bei der abschließenden Fertigung müssen die Prothesenzähne einzeln und manuell auf die korrekte Passung in den dafür vorgesehenen Zahnfächern der Prothesenbasis kontrolliert werden, um sie anschließend einzukleben, wobei als Kontrollinstrument eine Transferschablone verwendet werden kann. Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Aus der DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen. Die DE 10 2014 118 231 B3 offenbart ein Verfahren, bei dem eine Schablone mit einem CAD/CAM-Verfahren hergestellt wird, wobei die Prothesenzähne in der Schablone in einer Prothesenbasis genau positioniert werden können. Die US 2015/0066181 A1 offenbart ein Verfahren, bei dem eine Negativform zur Halterung und Bearbeitung von Prothesenzähnen hergestellt wird.

Bei der Herstellung von herausnehmbarem Zahnersatz, wie Voll- und Teilprothesen, die mit Hilfe digitaler Daten mit einer CAD-Konstruktion gefertigt wurden, gibt es technische Lösungsansätze, die Daten der Prothesenbasis und der Zähne zu separieren. Die Prothesenbasis kann dabei durch ein additives oder auch subtraktives Fertigungsverfahren hergestellt werden. Als Prothesenzähne kommen konfektionierte Kunststoffzähne oder auch individuell hergestellte Prothesenzähne oder Zahnbögen aus den gleichen Ausgangsmaterialien in Frage. In jedem Fall müssen an der Prothesenbasis Zahnfächer zur Aufnahme dieser Prothesenzähne vorgesehen sein, in welche dann in einem nachgeschalteten manuellen Fertigungsschritt, die Prothesenzähne oder Zahnbögen, zum Beispiel durch Kleben, befestigt werden.

Solche Verfahren haben den Nachteil, dass insbesondere vorkonfektionierte Prothesenzähne oft okklusal und/oder basal nachbearbeitet werden müssen, wobei anschließend auch die Zahnfächer der Prothesenbasis beschliffen werden, um die Position und Lage der Prothesenzähne in der Dentalprothese anzupassen. In den meisten Fällen müssen bei vorkonfektionierten Prothesenzähnen, die die besten ästhetischen Ergebnisse liefern, diese vor dem Verkleben zumindest basal eingekürzt werden, um die Bisshöhe (die Okklusion) der Dentalprothese einzustellen, so dass sich die Notwendigkeit ergibt, hierzu ein rationelles und kostengünstiges Verfahren anzugeben.

Aus der EP 2 571 451 B1 und der EP 2 666 438 A2 sind hierfür Verfahren bekannt, bei denen vorkonfektionierte Prothesenzähne in einer Halterung in Wachs eingebettet werden und anschließend basal mittels CAM-Verfahren abgefräst werden. Die so gekürzten Prothesenzähne werden von dem Wachs befreit und anschließend in eine Prothesenbasis eingesetzt und dort eingeklebt, um eine Dentalprothese herzustellen.

Diese Verfahren haben den Nachteil, dass die Prothesenzähne einzeln oder in Gruppen bearbeitet und einzeln in die Prothesenbasis eingesetzt und eingeklebt werden müssen. Der richtige Ort zum Einsetzen der Prothesenzähne in die Prothesenbasis muss dabei durch Ausprobieren gefunden werden. Die passende basale Form der Prothesenzähne muss für jeden Prothesenzahn berechnet werden. Zudem müssen die Lagen und Orientierungen der einzelnen Prothesenzähne in dem Wachsblock bestimmt werden, damit diese mit einem vollautomatischen, computergesteuerten CAM-Fräsverfahren basal abgetragen werden können. Bei solchen Verfahren kann es zu Fehlsetzungen von Prothesenzähnen in der Prothesenbasis kommen oder diese Fehlsetzungen müssen mit zusätzlichen Maßnahmen verhindert werden. Bei der Verwendung von industriell gefertigten (und daher vorkonfektionierten) einzelnen Prothesenzähnen müssen diese in der Regel vor dem Verkleben basal gekürzt werden, um die Bisshöhe einzustellen beziehungsweise um mit der herzustellenden Dentalprothese eine optimale Okklusion zu erreichen.

Bei der Herstellung von hochwertigen und hochästhetischen Dentalprothesen unter Verwendung von solchen vorkonfektionierten Prothesenzähnen und einer mittels CAD/CAM-Verfahren gefertigten Prothesenbasis müssen die Prothesenzähne und die Prothesenbasis miteinander dauerhaft und kostengünstig verbunden werden. Das Verbinden der Prothesenzähne mit der Prothesenbasis soll daher möglichst leicht, unaufwendig und in wenigen Schritten erfolgen können. Da die Zahnfächer der Prothesenbasis meist nicht sehr tief angelegt werden können, haben die eingesetzten Prothesenzähne nicht genug Führung, so dass eine Rotations- und auch Kippbewegung in oraler beziehungsweise lingualer Richtung jedes einzelnen Prothesenzahnes aber auch der Prothesenzähne zueinander, die Dentalzwischenräume betreffend, möglich ist. Eine freihändige Positionierung der Prothesenzähne verwässert daher die Vorteile einer optimalen CAD-konstruierten Aufstellung und Abstimmung der Prothesenzähne in den Prothesenbasen für Ober- und Unterkiefer.

Die Aufgabe der Erfindung besteht also darin, die Nachteile des Stands der Technik zu überwinden. Insbesondere soll ein Verfahren bereitgestellt werden, mit dem eine einfache, für Fehler unanfällige und schnell durchzuführende Herstellung der Dentalprothese durchführbar ist, sowie eine Vorrichtung bereitzustellen mit der die wesentlichen Verfahrensschritte umsetzbar sind. Dabei sollen moderne computergesteuerte Verfahren einsetzbar sein und vorhandene Daten und Techniken möglichst weitreichend nutzbar sein. Zudem sollen die Prothesenzähne möglichst ohne eine Fehlsetzung in der zuvor berechneten Orientierung und Lage an der Prothesenbasis befestigt werden können. Die fertige Dentalprothese soll möglichst ohne weitere oder mit möglichst wenig manueller Nachbearbeitung einsatzbereit sein. Die Lage und Ausrichtung der Prothesenzähne in den Zahnfächern der Prothesenbasis sollen möglichst leicht und exakt zu erreichen sein.

Die Aufgaben der Erfindung werden gelöst durch ein Verfahren zur Herstellung einer Dentalprothese, wobei die Dentalprothese eine Prothesenbasis und mehrere Prothesenzähne aufweist, wobei das Verfahren unter Anwendung eines virtuellen dreidimensionalen Dentalprothesen-Modells der zu erzeugenden physischen Dentalprothese erfolgt und wobei das virtuelle dreidimensionale Dentalprothesen-Modell in zumindest ein virtuelles dreidimensionales Modell der Prothesenzähne und ein virtuelles dreidimensionales Modell der Prothesenbasis geteilt wird oder zumindest ein virtuelles dreidimensionales Modell der Prothesenzähne und ein virtuelles dreidimensionales Modell der Prothesenbasis umfasst, wobei
die Grenzfläche zwischen dem virtuellen Modell der Prothesenzähne und dem virtuellen Modell der Prothesenbasis derart berechnet wird, dass die Prothesenzähne im virtuellen Modell parallel zueinander ausgerichtete Wurzeln aufweisen und die Prothesenbasis im virtuellen Modell parallel ausgerichtete Zahnfächer aufweisen, wobei die Zahnfächer eine Negativform der Wurzeln der Prothesenzähne bilden, aufweisend die folgenden Schritte:
A) mehrere vorkonfektionierte Prothesenzähne zur Herstellung der Dentalprothese werden oder sind in einem Haltemittel fixiert;
B) die Prothesenbasis wird entsprechend dem virtuellen Modell der Prothesenbasis mit einem CAM-Verfahren erzeugt, wobei in der Prothesenbasis Zahnfächer erzeugt werden, die parallel zueinander liegen;
C) die Prothesenzähne werden in dem Haltemittel basal und dort angrenzend zervikal entsprechend dem virtuellen Modell der Prothesenzähne mit einem CAM-Verfahren bearbeitet, so dass Zylinderachsen von zylindrischen oder angenähert zylindrischen erzeugten Wurzeln der Prothesenzähne und/oder Kegelachsen von kegelförmigen und/oder kegelstumpfförmigen oder angenähert kegelförmigen und/oder kegelstumpfförmigen erzeugten Wurzeln der Prothesenzähne parallel zueinander liegen, wenn die Prothesenzähne in die Prothesenbasis eingesetzt werden, und so dass die Wurzeln eine Symmetrieachse aufweisen, die der Einschubrichtung in die Zahnfächer der Prothesenbasis entspricht oder zumindest weitgehend der Einschubrichtung in die Zahnfächer der Prothesenbasis entspricht;
D) die bearbeiteten Prothesenzähne werden zusammen oder gruppenweise in die Zahnfächer der Prothesenbasis eingesetzt und dort befestigt.

Als CAM-Verfahren sind insbesondere Rapid-Prototyping-Verfahren besonders bevorzugt. Vorzugsweise werden die Prothesenzähne an der basalen Seite subtraktiv bearbeitet. Dabei wird besonders bevorzugt eine computergesteuerte CAM-Fräse, wie beispielsweise eine computergesteuerte 4-Achs- oder 5-Achs-Fräse, verwendet.

Die Zahnfächer und die Wurzeln der Prothesenzähne haben eine zylindrische Form oder die Form eines Kegels oder Kegelstumpfs oder haben eine angenähert zylindrische Form oder die Form eines angenäherten Kegels oder angenäherten Kegelstumpfs. Eine parallele Ausrichtung der Zahnfächer (oder der Wurzeln der Prothesenzähne) entspricht dann einer parallelen Ausrichtung der Zylinderachsen und/oder Kegelachsen. Es kann aber auch sein, dass die Formen der Zahnfächer und der Wurzeln von diesen Formen abweichen. Die Formen der Zahnfächer und äquivalent dazu die Form der Wurzeln der Prothesenzähne können dann aber in einer guten Näherung durch jeweils einen Zylinder, einen Kegel oder einen Kegelstumpf angenähert werden, beispielsweise rechnerisch. Unter parallel ausgerichteten Zahnfächern ist dann eine parallele Ausrichtung der Zylinderachsen der angenäherten Zylinder und/oder der Kegelachsen der angenäherten Kegel und/oder Kegelstümpfe zu verstehen, die in guter Näherung der Form der tatsächlichen Zahnfächer entsprechen. Das gleiche gilt für die Wurzeln der Prothesenzähne.

Vorzugsweise werden die Prothesenzähne durch Einkleben in die Zahnfächer der Prothesenbasis befestigt.

Die Bezeichnung "okklusal" bedeutet an der Okklusionsfläche beziehungsweise Kaufläche und zur Okklusionsfläche hin als Lage- und Richtungsbezeichnung an den Zähnen. Die Bezeichnung "zervikal" bedeutet am Zahnhals, zum Zahnhals hin. Diese Begriffe werden auch für Prothesenzähne angewendet.

Unter einer Wurzel eines Prothesenzahns ist der sich unterhalb der Krone angeordnete und in Richtung von der Okklusionsfläche weg erstreckende Bereich des Prothesenzahns zu verstehen, der zur Verbindung mit der Prothesenbasis verwendet wird, beziehungsweise verwendbar ist. Dabei wird angenommen, dass die Okklusionsfläche des Prothesenzahns dessen oberes (koronales) Ende definiert. Selbstverständlich dient die Wurzel des Prothesenzahns also nicht der Verankerung des Prothesenzahns in den Alveolen des Kieferknochens, sondern eben in den Zahnfächern der Prothesenbasis.

Bei erfindungsgemäßen Verfahren kann vorgesehen sein, dass die vorkonfektionierten Prothesenzähne in Schritt A) in einem Haltemittel in einer Position und Lage zueinander fixiert werden, in der die koronalen Seiten der Prothesenzähne der Lage und Ausrichtung der Prothesenzähne zueinander im virtuellen Dentalprothesen-Modell entsprechen.

Hierdurch können die Prothesenzähne gleich in der gewünschten Endposition gehalten werden, so dass die Bearbeitung der Prothesenzähne und das nachfolgende Verfahren vereinfacht wird. Dies ermöglicht also ein gemeinsames Prozessieren aller Prothesenzähne während des Verfahrens und zwar auch beim Einsetzen und Befestigen der Prothesenzähne in den Zahnfächern.

Dabei kann vorgesehen sein, dass in Schritt C) die vorkonfektionierten Prothesenzähne zur Bearbeitung mit dem Haltemittel in einer CAM-Vorrichtung, insbesondere in einer computergesteuerten Fräse als CAM-Vorrichtung, befestigt werden.

Hierdurch kann das Haltemittel zur Fixierung und Halterung der Prothesenzähne in der CAM-Vorrichtung zur Bearbeitung der basalen Seiten der Prothesenzähne verwendet werden.

Gemäß einer bevorzugten Ausführung des erfindungsgemäßen Verfahrens kann vorgesehen sein, dass die basalen Enden der Prothesenzähne frei liegen, wenn diese im Haltemittel fixiert sind. Dadurch können die Prothesenzähne an der basalen Seite leichter basal und zervikal bearbeitet werden.

Des Weiteren kann vorgesehen sein, dass in Schritt D) die in dem Haltemittel fixierten und bearbeiteten Prothesenzähne in die Prothesenbasis eingesetzt werden und in Schritt D) oder zeitlich nach Schritt D) das Haltemittel entfernt wird, nachdem die bearbeiteten Prothesenzähne in die Prothesenbasis eingesetzt wurden.

Dadurch kann das Haltemittel auch zur Positionierung der Prothesenzähne in der Prothesenbasis verwendet werden. Damit wird das Verfahren weiter vereinfacht und die Anzahl notwendiger Arbeitsschritte reduziert. Durch diesen Schritt soll zudem klargestellt werden, dass das Haltemittel nicht endgültig mit den Prothesenzähnen verbunden wird. Im Gegensatz dazu sollen die Prothesenzähne abschließend endgültig mit der Prothesenbasis verbunden werden beziehungsweise sein, um die Dentalprothese zu erzeugen.

Mit einer Weiterbildung des erfindungsgemäßen Verfahrens wird vorgeschlagen, dass das virtuelle dreidimensionale Dentalprothesen-Modell rechnerisch mittels File-Splitting in das zumindest eine virtuelle dreidimensionale Modell der Prothesenzähne und das virtuelle dreidimensionale Modell der Prothesenbasis getrennt wird.

Dadurch kann zunächst das virtuelle Dentalprothesen-Modell erzeugt werden und anschließend eine geeignete Grenzfläche zwischen dem zumindest einen virtuellen dreidimensionalen Modell der Prothesenzähne und dem virtuellen dreidimensionalen Modell der Prothesenbasis mit den parallelen Zahnfächern in der Prothesenbasis und den parallelen Wurzeln der Prothesenzähne erzeugt werden.

Dabei kann bevorzugt vorgesehen sein, dass bei der Teilung des virtuellen Dentalprothesen-Modells die Zahnfächer in das virtuelle Modell der Prothesenbasis und die Wurzeln in das zumindest eine virtuelle Modell der Prothesenzähne gerechnet werden, so dass die Form des virtuellen Modells der Prothesenbasis flächenbündig mit der Form der basalen Seiten des zumindest einen virtuellen Modells der Prothesenzähne verbunden beziehungsweise aneinandergelegt werden kann.

Hiermit wird erreicht, dass die Form der mit Hilfe der virtuellen Modelle erzeugten Prothesenbasis und bearbeiteten Prothesenzähne exakt aneinanderpassen und flächenbündig und dadurch stabil miteinander befestigt werden können, beziehungsweise die nach Maßgabe des zumindest einen virtuellen Modells der Prothesenzähne hergestellten oder bearbeiteten physischen Prothesenzähne flächenbündig und alle aus der gleichen Richtung in die Zahnfächer der physischen Prothesenbasis eingesetzt beziehungsweise eingesteckt werden können. Zur Befestigung kann selbstverständlich auch ein Spaltmaß oder Klebespalt vorgesehen sein, der direkt in die Grenzfläche eingerechnet wird. Das Spaltmaß beziehungsweise der Klebespalt können dann beim Aufbau der physischen Dentalprothese mit einem Zement oder einem Kleber zum Verbinden der Prothesenzähne mit der Prothesenbasis gefüllt werden.

Des Weiteren kann vorgesehen sein, dass bei der Berechnung der Grenzfläche zwischen dem zumindest einen virtuellen Modell der Prothesenzähne und dem virtuellen Modell der Prothesenbasis die Oberflächen der berechneten Wurzeln der virtuellen Modelle der Prothesenzähne oder die gesamte Grenzfläche innerhalb der virtuellen Oberfläche der unbearbeiteten vorkonfektionierten Prothesenzähne angeordnet werden.

Hierdurch wird sichergestellt, dass die vorkonfektionierten Prothesenzähne durch ein subtraktives Bearbeitungsverfahren, insbesondere ein Fräsverfahren, in die zuvor berechnete Form des virtuellen Modells der Prothesenzähne gebracht werden können.

Bevorzugt kann ferner vorgesehen sein, dass aus der äußeren Form okklusaler Oberflächen der Prothesenzähne oder aus der äußeren Form zervikaler Oberflächen der koronalen Seite der Prothesenzähne und okklusaler Oberflächen der Prothesenzähne des virtuellen dreidimensionalen Dentalprothesen-Modells ein virtuelles Modell des Haltemittels berechnet wird, so dass ein Bereich der virtuellen Oberfläche des virtuellen Haltemittels durch ein Negativ der okklusalen Oberflächen oder der okklusalen und zervikalen Oberflächen der Prothesenzähne gebildet wird, wobei die Lage und die Orientierung der Prothesenzähne relativ zueinander in dem Negativ erhalten bleibt, wobei das physische Haltemittel mit einem CAM-Verfahren anhand der Daten des virtuellen Modells des Haltemittels hergestellt wird und die physischen Prothesenzähne an dem Haltemittel angelegt und befestigt werden, wobei die okklusalen Oberflächen oder die okklusalen und zervikalen Oberflächen der Prothesenzähne an die als passendes Negativ geformte Oberfläche des Haltemittels angelegt werden.

Dadurch wird mit den ohnehin verfügbaren Daten ein Haltemittel berechnet und hergestellt, mit dem das Verfahren schnell und mit möglichst wenigen Arbeitsschritten durchführbar ist.

Bevorzugt kann vorgesehen sein, dass das Haltemittel mit einem CAM-Verfahren, insbesondere mit einem Rapid-Prototyping-Verfahren, basierend auf dem virtuellen Modell des Haltemittels hergestellt und/oder bearbeitet wird.

Es kann auch vorgesehen sein, dass das virtuelle dreidimensionale Dentalprothesen-Modell auf der Grundlage eines Intraoral-Scans oder eines Scans eines Abdrucks der Mundraumsituation beim Patienten zur Formgebung der virtuellen Prothesenbasis und durch eine virtuelle Aufstellung von virtuellen Modellen der vorkonfektionierten Prothesenzähne in der virtuellen Prothesenbasis erzeugt wird, wobei bevorzugt die Form, die Lage und/oder die Orientierung der Prothesenzähne durch eine Simulation der Lage der Dentalprothese im Mundraum des Patienten ausgewählt wird und/oder durch eine Simulation der Lage und Orientierung der Prothesenzähne zueinander und/oder zur Prothesenbasis ausgewählt wird, wobei besonders bevorzugt die Okklusionsebene und/oder die Kaubewegungen des Kiefers simuliert werden.

Hierdurch wird eine hochwertige Dentalprothese geschaffen die nur möglichst wenig nachgearbeitet werden muss. Gleichzeitig ermöglicht die so hergestellte Dentalprothese eine gute Kaufunktion beim Patienten.

Bevorzugte Verfahren können sich auch dadurch auszeichnen, dass in Schritt C) die Prothesenzähne basierend auf dem virtuellen Modell der Prothesenzähne mit dem CAM-Verfahren basal und auf der basalen Seite zervikal abgetragen werden, bevorzugt mit einer computergesteuerten Fräse abgefräst werden.

Hierdurch muss kein Aufbau am basalen Bereich der Prothesenzähne stattfinden, wodurch die Stabilität der Prothesenzähne erhalten wird und damit die Stabilität der Dentalprothese optimiert wird. Die Prothesenbasis kann generativ erzeugt werden, also beispielsweide mit einem 3D-Drucker gefertigt werden.

Ferner kann vorgesehen sein, dass die Prothesenzähne anhand des virtuellen Modells der Prothesenzähne mit dem CAM-Verfahren basal und auf der basalen Seite zervikal derart abgetragen werden, insbesondere abgefräst werden, dass die Form der erzeugten Wurzeln der Prothesenzähne derart an Zahnfächer für die Prothesenzähne in der Prothesenbasis angepasst wird, dass die äußere Form der Prothesenbasis mit den eingesetzten Prothesenzähnen der äußeren Form des virtuellen Dentalprothesen-Modells entspricht.

Es kann alternativ auch vorgesehen sein, dass die vorkonfektionierten Prothesenzähne mit einem CAM-Verfahren hergestellt werden, bevorzugt durch Fräsen oder ein aufbauendes CAM-Verfahren hergestellt werden.

Mit einer Weiterbildung des erfindungsgemäßen Verfahrens kann vorgesehen sein, dass zur Berechnung des virtuellen Dentalprothesen-Modells bereits vorhandene Daten zur äußeren Form von bekannten vorkonfektionierten Prothesenzähnen verwendet werden.

Dadurch müssen die äußeren Formen der vorkonfektionierten Prothesenzähne nicht aufgenommen beziehungsweise eingescannt werden.

Ferner ist vorgesehen, dass die Prothesenzähne in Schritt C) derart bearbeitet werden, dass die Wurzeln eine Symmetrieachse oder eine angenäherte Form mit einer Symmetrieachse aufweisen, die der Einschubrichtung in die Zahnfächer der Prothesenbasis entspricht oder zumindest weitgehend der Einschubrichtung in die Zahnfächer der Prothesenbasis entspricht.

Dadurch können die bearbeiteten Prothesenzähne einfach in die Zahnfächer der Prothesenbasis eingesetzt werden, da die Wurzeln der bearbeiteten Prothesenzähne leicht und parallel zueinander in die Zahnfächer gleiten. Weitgehend bedeutet in diesem Zusammenhang, dass die Abweichung der Achsen maximal 2° beträgt.

Dabei kann wiederum vorgesehen sein, dass die Symmetrieachse der Wurzeln bei wenigstens einem der bearbeiteten Prothesenzähne gegen die Achse der koronalen Seiten der Prothesenzähne geneigt ist, vorzugsweise um zumindest 0,5° geneigt ist, besonders bevorzugt um zumindest 2° geneigt ist.

Die Achse der koronalen Seiten der Prothesenzähne ist vorzugsweise die Achse, die senkrecht zur Okklusionsebene des Prothesenzahns und durch dessen Schwerpunkt verläuft.

Hierdurch wird verdeutlicht, dass die Prothesenzähne an der basalen Seite ohne Rücksicht auf die Lage der Achse der koronalen Seite der Prothesenzähne gefertigt werden muss und kann. Dadurch wird die Verbindung der bearbeiteten Prothesenzähne mit der Prothesenbasis unabhängig von der Lage der Achsen der koronalen Seiten der Prothesenzähne zueinander vereinfacht.

Erfindungsgemäß kann auch vorgesehen sein, dass das Haltemittel ein Silikonschlüssel, ein Vorwall, ein Wachs oder eine Okklusionsplatte ist.

Wenn als Haltemittel ein Wachs verwendet wird, wird das Wachs vor dem endgültigen Verbinden der bearbeiteten Prothesenzähne mit der Prothesenbasis durch Ausschmelzen und Reinigen der Prothesenzähne entfernt, wobei vorzugsweise das Reinigen der Prothesenzähne mit heißem Wasser oder Wasserdampf erfolgt.

Derartige Haltemittel sind gut zur Halterung der Prothesenzähne während der Bearbeitung und während des Verbindens der Prothesenzähne mit der Prothesenbasis geeignet.

Des Weiteren kann vorgesehen sein, dass die Prothesenzähne in einem einzigen Arbeitsschritt gleichzeitig und gemeinsam mit der Prothesenbasis verbunden werden.

Damit wird erreicht, dass die Anzahl der notwendigen Arbeitsschritte auf ein Minimum reduziert wird.

Die der vorliegenden Erfindung zugrundeliegenden Aufgaben werden auch gelöst durch eine Dentalprothese hergestellt mit einem erfindungsgemäßen Verfahren, wobei mehrere Prothesenzähne oder alle Prothesenzähne der Dentalprothese parallel zueinander ausgerichtete Wurzeln aufweisen, die in passenden parallel zueinander ausgerichteten Zahnfächern der Prothesenbasis befestigt sind, insbesondere eingeklebt sind.

Dabei kann vorgesehen sein, dass die mit der Prothesenbasis verbundenen vorkonfektionierten Prothesenzähne an der Okklusionsfläche, vorzugsweise an der gesamten koronalen Seite, nicht oder nur unwesentlich manuell nachbearbeitet sind.

Die mit dem vorteilhaften erfindungsgemäßen Verfahren hergestellten Dentalprothesen ermöglichen es, dass die koronalen Seiten oder zumindest die Okklusionsflächen der Prothesenzähne nicht zwingend und dadurch nicht mit einem CAM-Verfahren bearbeitet werden müssen. Daraus ergibt sich der Vorteil, dass die Struktur, insbesondere die geringe Rauigkeit, dieser Oberflächen erhalten bleibt, so dass die Dentalprothese während der Benutzung weniger schnell mit Belägen verschmutzt und leichter zu reinigen ist. Zudem kann die Dentalprothese so schneller und kostengünstiger gefertigt werden.

Die der vorliegenden Erfindung zugrundeliegenden Aufgaben werden ferner gelöst durch eine Vorrichtung oder Kombination von Vorrichtungen zum Durchführen eines Verfahrens nach einem der Ansprüche 1 bis 11, umfassend zumindest eine CAM-Vorrichtung und einen Computer zur Berechnung der virtuellen Modelle und zur Steuerung einer ersten CAM-Vorrichtung zum Bearbeiten der basalen Seiten der Prothesenzähne und zur Steuerung der ersten CAM-Vorrichtung oder einer zweiten CAM-Vorrichtung zum Herstellen der Prothesenbasis.

Die Vorrichtung oder die Kombination von Vorrichtungen benötigt dabei keine Einrichtung, mit der das Haltemittel hergestellt wird, wenn das Haltemittel manuell gegossen wird. Es kann aber auch bevorzugt vorgesehen sein, dass die Vorrichtung oder die Kombination von Vorrichtungen ein Modul zur Berechnung eines virtuellen dreidimensionalen Modells des Haltemittels aufweist.

Bei erfindungsgemäßen Vorrichtungen oder Kombinationen von Vorrichtungen kann vorzugsweise auch vorgesehen sein, dass die Vorrichtung oder die Kombination von Vorrichtungen zumindest eines der folgenden Module umfasst:
ein Dentalprothesenberechnungsmodul zur Berechnung eines virtuellen dreidimensionalen Modells einer Dentalprothese aus den Daten der Mundraumsituation eines Patienten,
ein Wurzelberechnungsmodul zur Berechnung einer Grenzfläche zwischen einem virtuellen dreidimensionalen Modell der Prothesenbasis und zumindest einem virtuellen dreidimensionalen Modell der Prothesenzähne, wobei das Wurzelberechnungsmodul derart programmiert ist, dass zu jeder virtuellen dreidimensionalen Form jedes Prothesenzahns des zumindest einen Modells der Prothesenzähne eine basale Wurzel als Teil der Grenzfläche berechnet wird, wobei die basalen Wurzeln parallel zueinander ausgerichtet sind, und
ein File-Splitting-Modul zur rechnerischen Trennung eines virtuellen dreidimensionalen Dentalprothesen-Modells in ein virtuelles dreidimensionales Modell der Prothesenbasis und zumindest ein virtuelles dreidimensionales Modell der Prothesenzähne.

Das Dentalprothesenberechnungsmodul ist dabei bevorzugt zur Berechnung eines virtuellen dreidimensionalen Modells einer Dentalprothese aus den Daten der Mundraumsituation eines Patienten und aus den dreidimensionalen Formdaten unterschiedlicher Sätze vorkonfektionierter Prothesenzähne ausgelegt.

Der Erfindung liegt die überraschende Erkenntnis zugrunde, dass durch eine parallele Ausrichtung von Wurzeln von mehreren Prothesenzähnen und dazu passenden parallel ausgerichteten Zahnfächern ein gleichzeitiges Einsetzen und befestigen der Prothesenzähne in die Prothesenbasis erfolgen kann, wobei das Einsetzen in einem Arbeitsschritt erfolgen kann. Zudem kann so auch erreicht werden, dass die Prothesenzähne in der gewünschten Lage und Orientierung zueinander angeordnet sind und auch die Verwechslung von Prothesenzähnen und ein Verdrehen oder Verkippen der Prothesenzähne gegeneinander unmöglich wird. Durch das Einsetzen der Prothesenzähne in einem einzigen Schritt wird Arbeitszeit gespart und das Verfahren kann schneller umgesetzt werden.

Im Folgenden werden Ausführungsbeispiele der Erfindung anhand von fünf schematisch dargestellten Figuren erläutert, ohne jedoch dabei die Erfindung zu beschränken. Dabei zeigt:
Figur 1 und Figur 2: einen Ablauf eines beispielhaften erfindungsgemäßen Verfahrens als insgesamt fünf übereinander angeordnete schematische Querschnittansichten;
Figur 3: eine schematische Querschnittansicht eines unbearbeiteten vorkonfektionierten Prothesenzahns;
Figur 4: eine schematische Querschnittansicht des Prothesenzahns nach Figur 3 nach basaler Bearbeitung und einer Prothesenbasis mit passendem Zahnfach;
Figur 5: eine schematische Darstellung einer erfindungsgemäßen Vorrichtung zur Umsetzung eines erfindungsgemäßen Verfahrens; und
Figur 6: ein beispielhaftes Ablaufdiagramm für ein erfindungsgemäßes Verfahren.

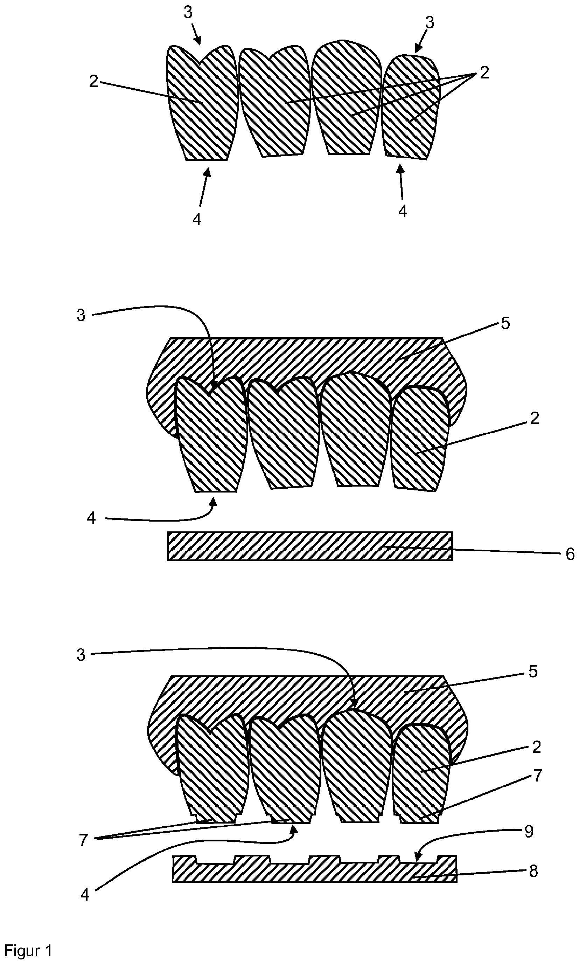

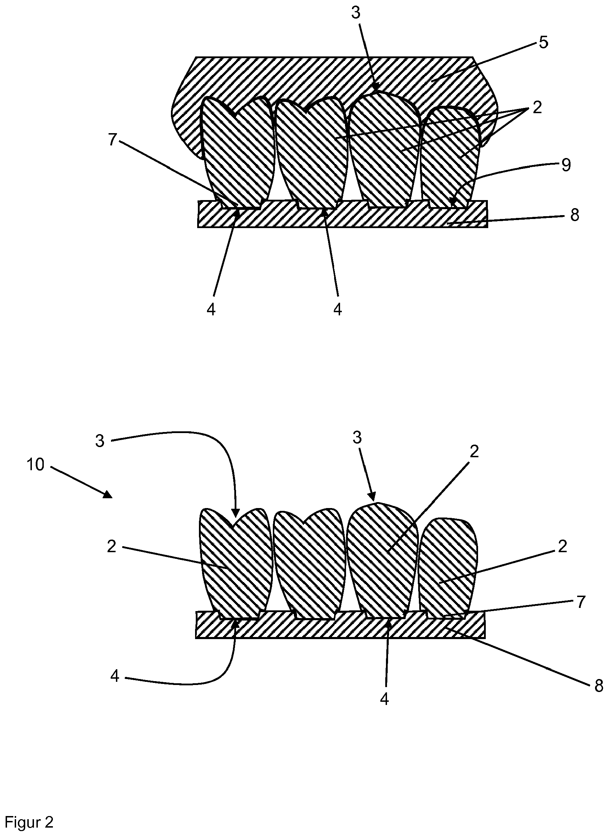

Die Figuren 1 und 2 zeigen den Ablauf eines beispielhaften erfindungsgemäßen Verfahrens in fünf Schritten als insgesamt fünf übereinander angeordnete schematische Querschnittansichten.

In Figur 1 sind dazu die ersten drei Verfahrensschritte gezeigt. Zu Beginn des Verfahrens (Figur 1 obere Zeichnung) werden mehrere vorkonfektionierte Prothesenzähne 2 bereitgestellt. Die Prothesenzähne 2 wurden anhand eines rechnerischen Verfahrens ausgewählt. Zunächst wird mit einem CAD-Verfahren anhand eines Modells der Mundraumsituation eines Patienten (in den Figuren 1 und 2 nicht gezeigt) ein virtuelles dreidimensionales Dentalprothesen-Modell erzeugt. Dabei bestimmt die Form der Mukosa die Form der Auflagefläche der Dentalprothese und passende Prothesenzähne 2 werden aus den bekannten dreidimensionalen Formen einer Vielzahl von zuvor registrierten vorkonfektionierten Prothesenzähnen ausgewählt. Dadurch bestimmen die ausgewählten Prothesenzähne 2 die virtuelle Form der Prothesenzähne 2 in dem virtuellen Dentalprothesen-Modell.

Jeder Prothesenzahn 2 hat eine koronale Seite 3 und eine basale Seite 4. Die koronalen Seiten 3 bilden später die Okklusionsflächen der Dentalprothese. Die virtuellen dreidimensionalen Modelle der Prothesenzähne 2 werden im virtuellen dreidimensionalen Dentalprothesen-Modell derart angeordnet, dass eine zur Mundraumsituation passende Dentalprothese mit passender Okklusion der Prothesenzähne 2 berechnet wird. Anschließend wird das virtuelle dreidimensionale Dentalprothesen-Modell rechnerisch durch File-Splitting in ein virtuelles dreidimensionales Modell der Prothesenbasis 8 und in virtuelle dreidimensionale Modelle der Prothesenzähne 2 zerlegt. Dabei werden die Grenzflächen zwischen dem Modell der Prothesenbasis 8 und den Modellen der Prothesenzähne 2 mit Wurzeln 7 für die Prothesenzähne 2 und mit dazu passenden Zahnfächern 9 in dem Modell der Prothesenbasis 8 berechnet. Bei der Ausformung der Grenzflächen werden die Wurzeln 7 der Modelle der Prothesenzähne 2 und die Zahnfächer 9 des Modells der Prothesenbasis 8 parallel zueinander ausgerichtet.

In einem nächsten Schritt (Figur 1 mittlere Zeichnung) werden die Prothesenzähne 2 mit ihren koronalen Seiten 3 in einem Haltemittel 5 fixiert. Das Haltemittel 5 kann beispielsweise ein Silikonschlüssel sein, der auf die Prothesenzähne 2 gegossen wird. Bevorzugt wird das Haltemittel 5 als Okklusionsplatte mit Hilfe eines CAD/CAM-Verfahren aus einem Negativ der koronalen Seiten der Prothesenzähne 2 im virtuellen Dentalprothesen-Modell berechnet. Dadurch wird sichergestellt, dass die Prothesenzähne 2 in dem Haltemittel 5 in der Position und Orientierung zueinander fixiert werden, in dem sie auch in der endgültigen Dentalprothese 10 (siehe Figur 2 untere Abbildung) angeordnet sind. In jedem Fall sollten die Prothesenzähne 2 möglichst in eben dieser Position und Orientierung zueinander in dem Haltemittel 5 fixiert werden. Zudem ist in der mittleren Zeichnung von Figur 1 unten ein Prothesenbasisrohling 6 aus einem passend gefärbten Kunststoff dargestellt, der für das weitere Verfahren bereitgestellt wird.

Im nächsten Schritt (Figur 1 unten) werden die Prothesenzähne 2 an der basalen Seite 4 basal und zervikal mit Hilfe einer computergesteuerten 4-Achs-Fräse basierend auf den durch das File-Splitting gewonnenen virtuellen dreidimensionalen Modellen der Prothesenzähne 2 abgeschliffen. Dadurch werden an den basalen Seiten 4 die zuvor berechneten parallel zueinander ausgerichteten Wurzeln 7 erzeugt.

Des Weiteren wird auch der Prothesenbasisrohling 6 mit einer computergesteuerten 4-Achs-Fräse basierend auf dem durch das File-Splitting gewonnenen virtuellen dreidimensionalen Modell der Prothesenbasis 8 abgeschliffen und so die physische Prothesenbasis 8 erzeugt. In der Prothesenbasis 8 sind dann dementsprechend die zu den Wurzeln 7 passenden Zahnfächer 9 erzeugt worden. Die Zahnfächer 9 sind demzufolge ebenfalls parallel zueinander ausgerichtet.

Durch die parallele Ausrichtung der Wurzeln 7 und der Zahnfächer 9 sowie durch die wie im virtuellen dreidimensionalen Dentalprothesen-Modell positionierten und orientierten Prothesenzähne 2 können die Prothesenzähne 2 in dem Haltemittel 5 einfach in die Zahnfächer 9 der Prothesenbasis 8 eingesetzt werden. Diese Situation ist in Figur 2 oben gezeigt. Die Wurzeln 7 und die Zahnfächer 9 haben eine konische oder zumindest zusammenlaufende Form, um die Verbindung der Prothesenzähne 2 mit der Prothesenbasis 8 zu vereinfachen. Die Prothesenzähne 2 werden mit einem PMMA-Zement oder einem Kleber in die Zahnfächer 9 eingeklebt. Hierzu wird der Zement oder der Kleber zuvor passend oder im Überschuss in die Zahnfächer 9 gefüllt.

Zur Zementierung kann ein Zement oder Klebstoff im Überschuss verwendet werden, so dass mögliche Zwischenräume zwischen den Zahnfächern 9 zur Fixierung der Prothesenzähne 2 in der Prothesenbasis 8 und den Prothesenzähnen 2 mit dem Zement oder Klebstoff gefüllt werden, ohne dass basale Hohlräume in den Zwischenräumen verbleiben und ohne dass im Gingiva-Zahnhalsbereich der erzeugten Dentalprothese Randspalte verbleiben. Zudem werden durch den Überschuss die Kontaktflächen optimal benetzt. Hervorquellende überschüssige Zementteigreste oder Kleberreste können vor dem Aushärten und/oder nach dem Aushärten entfernt werden. Zur endgültigen Befestigung der Prothesenzähne 2 in der Prothesenbasis 8 wird bevorzugt ein selbsthärtender Zement auf Pulver-Flüssigkeitsbasis verwendet. Der Klebstoff beziehungsweise der Zement kann auch oder zusätzlich auf die Wurzeln 7 der Prothesenzähne 2 aufgebracht werden.

Nach dem Aushärten des PMMA-Zements oder Klebers sind die Prothesenzähne 2 endgültig mit der Prothesenbasis 8 verbunden. Anschließend kann das Haltemittel 5 entfernt werden. Die so fertiggestellte Dentalprothese 10 ist in Figur 2 unten gezeigt.

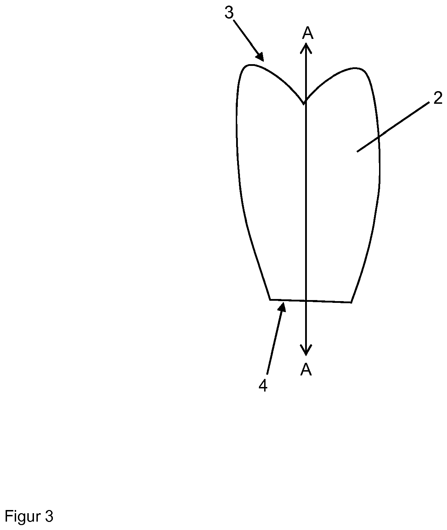

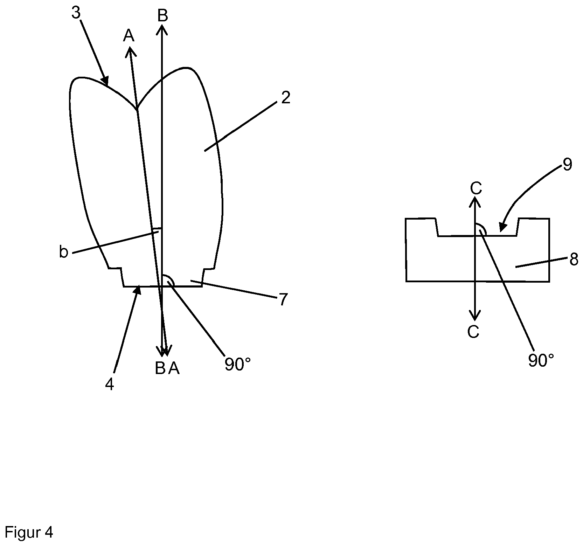

Mit den Figuren 3 und 4 wird mittels schematischer seitlicher Querschnittansichten gezeigt, dass die Orientierung der Ausrichtung der koronalen Seite 3 der Prothesenzähne 2 bei einem erfindungsgemäßen Verfahren nicht mit der Orientierung der Ausrichtung der Wurzel 7 übereinstimmen muss. Stattdessen wird das Verfahren sogar vorzugsweise so ausgeführt, dass die Ausrichtung der koronalen Seite 3 der Prothesenzähne 2 nicht mit der Orientierung der Ausrichtung der Wurzel 7 übereinstimmt. Damit können die Prothesenzähne 2 genauer und für die Okklusion der Dentalprothese passender aufgebaut werden. Der unbearbeitete Prothesenzahn 2 (siehe Figur 3) hat eine Symmetrieachse A die durch die Form des Prothesenzahns 2, insbesondere der koronalen Seite 3 des Prothesenzahns 2 bestimmt ist. Bei der Bearbeitung des Prothesenzahns 2 wird eine Wurzel 7 in die basale Seite 4 des Prothesenzahns 2 eingefräst oder eingeschliffen (siehe Figur 4). Die Wurzel 7 hat eine konische Form mit einer Symmetrieachse B. Die Symmetrieachse B der Wurzel 7 ist dabei in Figur 4 senkrecht zu einer ebenen basalen Fläche der Wurzel 7 ausgerichtet. Die Wurzel 7 hat allerdings oft keine ebene Unterseite, sondern ist bevorzugt an die Form der Prothesenbasis 8 angepasst. Die Wurzel 7 ist in der Realität zumindest näherungsweise zylinderförmig oder kegelstumpfförmig geformt. Die Symmetrieachse B ist durch die Lage der Symmetrieachse dieses angenäherten Zylinders oder Kegels definiert. Die Ausrichtung der Symmetrieachse A wird bei dem bearbeiteten Prothesenzahn 2 nur noch durch die koronale Seite 3 des Prothesenzahns 2 bestimmt.

Wie in Figur 4 zu erkennen ist, stimmen die Symmetrieachsen A und B nicht überein, sondern sie sind in einem Winkel b von 7° gegeneinander verkippt.

Dazu passend ist in der Prothesenbasis 8 ein Zahnfach 9 mit konischer oder zusammenlaufender Form vorgesehen, die zu der Wurzel 7 des Prothesenzahns 2 passt. Dementsprechend hat das Zahnfach 9 eine passende Symmetrie mit einer passenden Symmetrieachse C. Die Symmetrieachse C des Zahnfachs 9 und die Symmetrieachse B der Wurzel 7 stimmen miteinander überein, wenn der Prothesenzahn 2 in die Prothesenbasis 8 eingesetzt ist. Durch diese passenden Formen der Wurzeln 7 und der Zahnfächer 9 sowie durch die parallele Ausrichtung der Wurzeln 7 und der Zahnfächer 9 können die Prothesenzähne 2 einfach parallel zueinander und dadurch gleichzeitig und in einem Arbeitsschritt in die Prothesenbasis 8 eingeschoben werden.

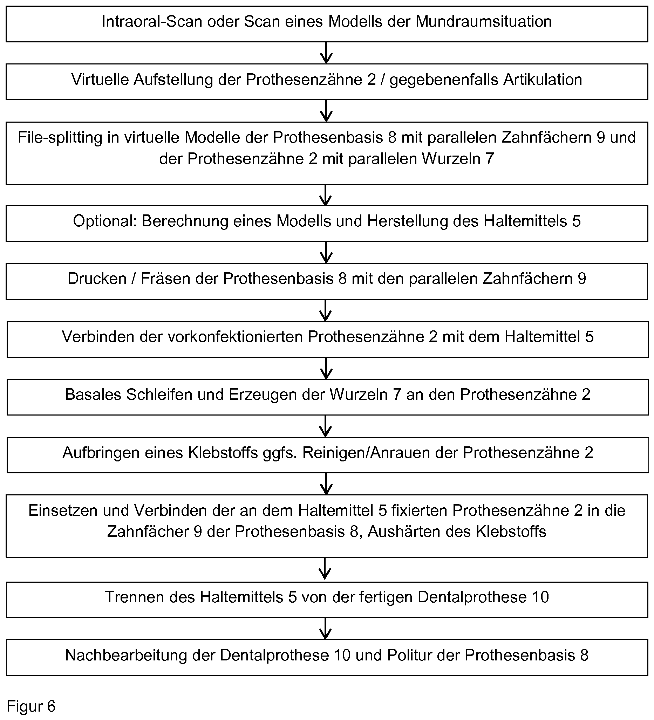

In Figur 6 wird ein beispielhaftes Ablaufdiagramm für ein erfindungsgemäßes Verfahren gezeigt.

Optional können die realen Prothesenzähne 2 durch Herstellen mit einem CAM-Verfahren erzeugt werden.

Erfindungsgemäß werden die der vorliegenden Erfindung zugrundeliegenden Aufgaben also beispielsweise dadurch gelöst, dass, basierend auf einem Intraoral-Scan oder dem Scan eines Abdrucks (wie beispielsweise eines Gipsmodells) des zahnlosen oder teilweise zahnlosen Kiefers, zunächst eine virtuelle Dentalprothese digital konstruiert und anschließend mittels File-Splitting in einen Teil für die Prothesenbasis 8 und einen Teil für die Prothesenzähne 2 zerlegt wird.

Zur Positionierung der Prothesenzähne 2 wird nun ein Haltemittel 5 mittels CAM-Verfahren (beispielsweise Fräsen oder Drucken) hergestellt, um die Prothesenzähne 2 exakt in dieser zuvor festgelegten räumlichen Anordnung zu fixieren und auf die Prothesenbasis 3 übertragen zu können. Alternativ werden die Prothesenzähne 2 in die gewünschte Position und Orientierung zueinander gebracht und an der koronalen Seite 3 in ein flüssiges selbsthärtendes Material (wie beispielsweise ein Wachs) eingebettet und durch das Aushärten des Materials wird das Haltemittel 5 erzeugt.

Vor der endgültigen Befestigung der Prothesenzähne 2 in der Prothesenbasis 8 können die Prothesenzähne 2 auch zuvor provisorisch in der Prothesenbasis 8 temporär befestigt werden, um beim Patienten eine Anprobe der provisorischen Dentalprothese durchzuführen. Bei der Anprobe kann eine Korrektur der Aufstellung der Prothesenzähne 2 und der Prothesenbasis 8 erfolgen, bevor diese endgültig miteinander befestigt werden.

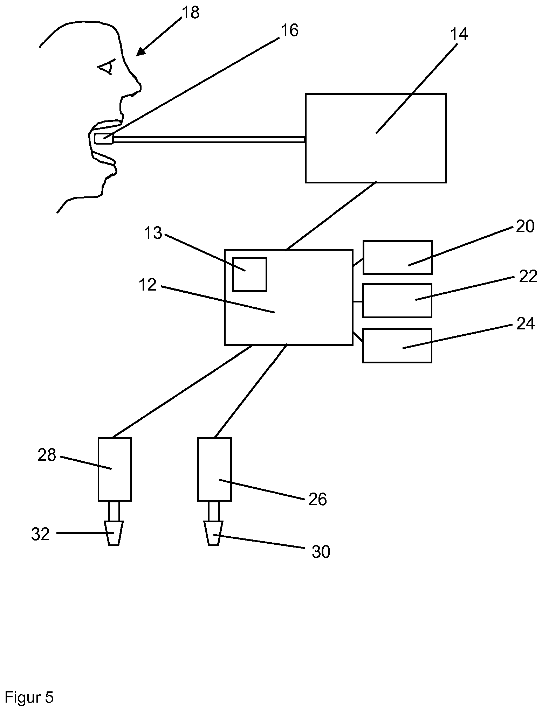

Figur 5 zeigt eine schematische Darstellung einer erfindungsgemäßen Vorrichtung zur Umsetzung eines erfindungsgemäßen Verfahrens. Die Vorrichtung kann auch als eine Kombination mehrerer miteinander verbundener Vorrichtungen verstanden werden.

Die Vorrichtung umfasst einen Computer 12, der geeignet programmiert ist, um die wesentlichen Schritte eines erfindungsgemäßen Verfahrens umzusetzen. Der Computer 12 weist einen elektronischen Datenspeicher 13 auf, in dem die virtuellen dreidimensionalen Modelle zur Umsetzung des Verfahrens gespeichert sind beziehungsweise speicherbar und zwischenspeicherbar sind. Beispielsweise können in dem Datenspeicher 13 die virtuellen dreidimensionalen Formen unterschiedlicher Sätze von vorkonfektionierten Prothesenzähnen 2 gespeichert sein, so dass mit dem Programm zur Umsetzung des Verfahrens auf diese Datensätze zugegriffen werden kann, um das virtuelle dreidimensionale Dentalprothesen-Modell 10 zu berechnen, in das die Daten dieser Formen der Prothesenzähne 2 (insbesondere deren koronale und zervikale Seiten) eingerechnet werden.

Der Computer 12 ist mit einem Intraoralscanner 14 verbunden. Der Intraoralscanner 14 umfasst einen Scanner-Kopf 16, der in den Mundraum eines Patienten 18 eingeführt werden kann, um die Mundraumsituation beim Patienten 18 aufzunehmen. Der Intraoralscanner 14 scannt so die Oberfläche der Mukosa und gegebenenfalls vorhandener Zähne des Patienten 18 ein. Diese Daten werden im Datenspeicher 13 des Computers 12 als virtuelles dreidimensionales Modell der Mundraumsituation des Patienten 18 gespeichert.

Aus diesem Modell der Mundraumsituation des Patienten 18 und den gespeicherten virtuellen dreidimensionalen Formen der Prothesenzähne 2 wird mit Hilfe eines Dentalprothesenberechnungsmoduls 20 ein virtuelles dreidimensionales Dentalprothesen-Modell berechnet.

Die Vorrichtung umfasst des Weiteren ein Wurzelberechnungsmodul 22 zur Berechnung einer Grenzfläche zwischen einem virtuellen dreidimensionalen Modell der Prothesenbasis 8 und zumindest einem virtuellen dreidimensionalen Modell der Prothesenzähne 2. Das virtuelle dreidimensionale Modell der Prothesenbasis 8 und das zumindest eine virtuelle dreidimensionale Modell der Prothesenzähne 2 wird mit Hilfe eines File-Splitting-Moduls 24 zur rechnerischen Trennung des virtuellen dreidimensionalen Dentalprothesen-Modells in das virtuelle dreidimensionale Modell der Prothesenbasis 8 und das zumindest eine virtuelle dreidimensionale Modell der Prothesenzähne 2 berechnet. Die Zwischenergebnisse werden in dem Datenspeicher 13 zwischengespeichert. Das Wurzelberechnungsmodul 22 ist dabei derart programmiert, dass zu jeder virtuellen dreidimensionalen Form jedes Prothesenzahns 2 des zumindest einen Modells der Prothesenzähne 2 eine basale Wurzel 7 als Teil der Grenzfläche berechnet wird, wobei die basalen Wurzeln 7 in dem virtuellen Dentalprothesen-Modell parallel zueinander liegen beziehungsweise ausgerichtet sind. Demzufolge werden in das virtuelle dreidimensionale Modell der Prothesenbasis 8 Zahnfächer 9 mit paralleler Lage eingerechnet, da diese ja die Negativformen der Wurzeln 7 sind.

Zur basalen und zervikalen Bearbeitung der Prothesenzähne 2, das heißt zur Ausformung der Wurzeln 7 an den physischen Prothesenzähnen 2, wird von dem Computer 12 eine erste CAM-gesteuerte 4-Achs-Fräse 26 mit einem Fräskopf 30 gesteuert. Mit der ersten CAM-gesteuerten 4-Achs-Fräse 26 werden die unbearbeiteten Prothesenzähne 2 (siehe Figur 1 oben und Figur 3) basal und auf der basalen Seite zervikal bearbeitet und dabei die Wurzeln 7 entsprechend dem zumindest einen virtuellen dreidimensionalen Modell der Prothesenzähne 2 herausarbeitet (siehe Figur 1 unterste Abbildung und Figur 4).

Zur Bearbeitung eines Prothesenbasisrohlings 6 (siehe Figur 1, mittlere Abbildung) kann eine zweite CAM-gesteuerte 4-Achs-Fräse 28 mit einem Fräskopf 32 vom Computer 12 gesteuert werden. Dabei werden die Zahnfächer 9 entsprechend dem virtuellen dreidimensionalen Modell der Prothesenbasis 8 in den Prothesenbasisrohling 6 hineingearbeitet, so dass daraus die Prothesenbasis 8 entsteht (siehe Figur 1, unterste Abbildung und Figur 4). Alternativ kann auch die erste CAM-gesteuerte 4-Achs-Fräse 26 zur Herstellung der Prothesenbasis 8 verwendet werden. Gemäß einer weiteren Alternative kann die Prothesenbasis 8 auch generativ mit einem 3D-Drucker (nicht gezeigt), der von dem Computer 12 gesteuert wird, direkt entsprechend dem virtuellen dreidimensionalen Modell der Prothesenbasis 8 hergestellt werden.

Als Haltemittel 5 (siehe Figur 1, mittlere und untere Abbildung) können die Prothesenzähne 2 in der dem Dentalprothesen-Modell entsprechenden Lage und Orientierung in Wachs eingegossen werden. Alternativ kann das Haltemittel 5 mit Hilfe des Computers 12 aus dem virtuellen dreidimensionalen Dentalprothesen-Modell, insbesondere aus den koronalen Oberflächen der Prothesenzähne 2 in dem Dentalprothesen-Modell berechnet werden, und aus einem Kunststoffblock mit der ersten CAM-gesteuerten 4-Achs-Fräse 26 oder der zweiten CAM-gesteuerten 4-Achs-Fräse 28 hergestellt werden. Die koronalen Seiten 3 der Prothesenzähne 2 werden dann beim Einsetzen in das Haltemittel 5 automatisch in die Lage und Orientierung zueinander gebracht, die ihnen im dreidimensionalen Dentalprothesen-Modell zugeordnet wurde.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 2: Prothesenzahn
- 3: Koronale Seite
- 4: Basale Seite
- 5: Haltemittel
- 6: Prothesenbasisrohling
- 7: Wurzel
- 8: Prothesenbasis
- 9: Zahnfach
- 10: Dentalprothese
- 12: Computer
- 13: elektronischer Datenspeicher
- 14: Intraoralscanner
- 16: Scanner-Kopf
- 18: Patient
- 20: Dentalprothesenberechnungsmodul
- 22: Wurzelberechnungsmodul
- 24: File-Splitting-Modul
- 26: CAM-gesteuerte 4-Achs-Fräse
- 28: CAM-gesteuerte 4-Achs-Fräse
- 30: Fräskopf
- 32: Fräskopf
- A: Achse der koronalen Seite des Prothesenzahns
- B: Achse der Wurzel des Prothesenzahns
- C: Achse des Zahnfachs

## Patentansprüche

1. Verfahren zur Herstellung einer Dentalprothese (10), wobei die Dentalprothese (10) eine Prothesenbasis (8) und mehrere Prothesenzähne (2) aufweist, wobei
das Verfahren unter Anwendung eines virtuellen dreidimensionalen Dentalprothesen-Modells der zu erzeugenden physischen Dentalprothese (10) erfolgt und wobei
das virtuelle dreidimensionale Dentalprothesen-Modell in zumindest ein virtuelles dreidimensionales Modell der Prothesenzähne (2) und ein virtuelles dreidimensionales Modell der Prothesenbasis (8) geteilt wird oder zumindest ein virtuelles dreidimensionales Modell der Prothesenzähne (2) und ein virtuelles dreidimensionales Modell der Prothesenbasis (8) umfasst, wobei
die Grenzfläche zwischen dem virtuellen Modell der Prothesenzähne (2) und dem virtuellen Modell der Prothesenbasis (8) derart berechnet wird, dass die Prothesenzähne (2) im virtuellen Modell parallel zueinander ausgerichtete Wurzeln (7) aufweisen und die Prothesenbasis (8) im virtuellen Modell parallel ausgerichtete Zahnfächer (9) aufweisen, wobei die Zahnfächer (9) eine Negativform der Wurzeln (7) der Prothesenzähne (2) bilden, aufweisend die folgenden Schritte:
A) mehrere vorkonfektionierte Prothesenzähne (2) zur Herstellung der Dentalprothese (10) werden oder sind in einem Haltemittel (5) fixiert;
B) die Prothesenbasis (8) wird entsprechend dem virtuellen Modell der Prothesenbasis (8) mit einem CAM-Verfahren erzeugt, wobei in der Prothesenbasis (8) Zahnfächer (9) erzeugt werden, die parallel zueinander liegen; **gekennzeichnet durch** die weiteren Schritte
C) die Prothesenzähne (2) werden in dem Haltemittel (5) basal und dort angrenzend zervikal entsprechend dem virtuellen Modell der Prothesenzähne (2) mit einem CAM-Verfahren bearbeitet, so dass Zylinderachsen von zylindrischen oder angenähert zylindrischen erzeugten Wurzeln (7) der Prothesenzähne (2) und/oder Kegelachsen von kegelförmigen und/oder kegelstumpfförmigen oder angenähert kegelförmigen und/oder kegelstumpfförmigen erzeugten Wurzeln (7) der Prothesenzähne (2) parallel zueinander liegen, wenn die Prothesenzähne (2) in die Prothesenbasis (8) eingesetzt werden, und so dass die Wurzeln (7) eine Symmetrieachse (B) aufweisen, die der Einschubrichtung in die Zahnfächer (9) der Prothesenbasis (8) entspricht oder zumindest weitgehend der Einschubrichtung in die Zahnfächer (9) der Prothesenbasis (8) entspricht;
D) die bearbeiteten Prothesenzähne (2) werden zusammen oder gruppenweise in die Zahnfächer (9) der Prothesenbasis (8) eingesetzt und dort befestigt.

2. Verfahren nach Anspruch 1, **dadurch gekennzeichnet, dass**
die vorkonfektionierten Prothesenzähne (2) in Schritt A) in einem Haltemittel (5) in einer Position und Lage zueinander fixiert werden, in der die koronalen Seiten (3) der Prothesenzähne (2) der Lage und Ausrichtung der Prothesenzähne (2) zueinander im virtuellen Dentalprothesen-Modell entsprechen.

3. Verfahren nach Anspruch 1 oder 2, **dadurch gekennzeichnet, dass**
in Schritt C) die vorkonfektionierten Prothesenzähne (2) zur Bearbeitung mit dem Haltemittel (5) in einer CAM-Vorrichtung (26), insbesondere in einer computergesteuerten Fräse (26) als CAM-Vorrichtung, befestigt werden.

4. Verfahren nach einem der vorangehenden Ansprüche, **dadurch gekennzeichnet, dass** in Schritt D) die in dem Haltemittel (5) fixierten und bearbeiteten Prothesenzähne (2) in die Prothesenbasis (8) eingesetzt werden und in Schritt D) oder zeitlich nach Schritt D) das Haltemittel (5) entfernt wird, nachdem die bearbeiteten Prothesenzähne (2) in die Prothesenbasis (8) eingesetzt wurden.

5. Verfahren nach einem der vorangehenden Ansprüche, **dadurch gekennzeichnet, dass** das virtuelle dreidimensionale Dentalprothesen-Modell rechnerisch mittels File-Splitting in das zumindest eine virtuelle dreidimensionale Modell der Prothesenzähne (2) und das virtuelle dreidimensionale Modell der Prothesenbasis (8) getrennt wird, und/oder
bei der Berechnung der Grenzfläche zwischen dem zumindest einen virtuellen Modell der Prothesenzähne (2) und dem virtuellen Modell der Prothesenbasis (8) die Oberflächen der berechneten Wurzeln (7) der virtuellen Modelle der Prothesenzähne (2) oder die gesamte Grenzfläche innerhalb der virtuellen Oberfläche der unbearbeiteten vorkonfektionierten Prothesenzähne (2) angeordnet werden.

6. Verfahren nach einem der vorangehenden Ansprüche, **dadurch gekennzeichnet, dass** aus der äußeren Form okklusaler Oberflächen der Prothesenzähne (2) oder aus der äußeren Form zervikaler Oberflächen der koronalen Seite (3) der Prothesenzähne (2) und okklusaler Oberflächen der Prothesenzähne (2) des virtuellen dreidimensionalen Dentalprothesen-Modells ein virtuelles Modell des Haltemittels (5) berechnet wird, so dass ein Bereich der virtuellen Oberfläche des virtuellen Haltemittels (5) durch ein Negativ der okklusalen Oberflächen oder der okklusalen und zervikalen Oberflächen der Prothesenzähne (2) gebildet wird, wobei die Lage und die Orientierung der Prothesenzähne (2) relativ zueinander in dem Negativ erhalten bleibt, wobei das physische Haltemittel (5) mit einem CAM-Verfahren anhand der Daten des virtuellen Modells des Haltemittels (5) hergestellt wird und die physischen Prothesenzähne (2) an dem Haltemittel (5) angelegt und befestigt werden, wobei die okklusalen Oberflächen oder die okklusalen und zervikalen Oberflächen der Prothesenzähne (2) an die als passendes Negativ geformte Oberfläche des Haltemittels (5) angelegt werden.

7. Verfahren nach einem der vorangehenden Ansprüche, **dadurch gekennzeichnet, dass** das virtuelle dreidimensionale Dentalprothesen-Modell auf der Grundlage eines Intraoral-Scans oder eines Scans eines Abdrucks der Mundraumsituation beim Patienten (18) zur Formgebung der virtuellen Prothesenbasis (8) und durch eine virtuelle Aufstellung von virtuellen Modellen der vorkonfektionierten Prothesenzähne (2) in der virtuellen Prothesenbasis (8) erzeugt wird, wobei bevorzugt die Form, die Lage und/oder die Orientierung der Prothesenzähne (2) durch eine Simulation der Lage der Dentalprothese (10) im Mundraum des Patienten (18) ausgewählt wird und/oder durch eine Simulation der Lage und Orientierung der Prothesenzähne (2) zueinander und/oder zur Prothesenbasis (8) ausgewählt wird, wobei besonders bevorzugt die Okklusionsebene und/oder die Kaubewegungen des Kiefers simuliert werden.

8. Verfahren nach einem der vorangehenden Ansprüche, **dadurch gekennzeichnet, dass** in Schritt C) die Prothesenzähne (2) basierend auf dem virtuellen Modell der Prothesenzähne (2) mit dem CAM-Verfahren basal und auf der basalen Seite (4) zervikal abgetragen werden, bevorzugt mit einer computergesteuerten Fräse (26, 28) abgefräst werden, und/oder zur Berechnung des virtuellen Dentalprothesen-Modells bereits vorhandene Daten zur äußeren Form von bekannten vorkonfektionierten Prothesenzähnen (2) verwendet werden.

9. Verfahren nach einem der vorangehenden Ansprüche, **dadurch gekennzeichnet, dass** die Symmetrieachse (B) der Wurzeln (7) bei wenigstens einem der bearbeiteten Prothesenzähne (2) gegen die Achse (A) der koronalen Seiten (3) der Prothesenzähne (2) geneigt ist, vorzugsweise um zumindest 0,5° geneigt ist, besonders bevorzugt um zumindest 2° geneigt ist.

10. Verfahren nach einem der vorangehenden Ansprüche, **dadurch gekennzeichnet, dass** das Haltemittel (5) ein Silikonschlüssel, ein Vorwall, ein Wachs oder eine Okklusionsplatte ist.

11. Verfahren nach einem der vorangehenden Ansprüche, **dadurch gekennzeichnet, dass** die Prothesenzähne (2) in einem einzigen Arbeitsschritt gleichzeitig und gemeinsam mit der Prothesenbasis (8) verbunden werden.

12. Dentalprothese (10) hergestellt mit einem Verfahren nach einem der vorangehenden Ansprüche, wobei mehrere Prothesenzähne (2) oder alle Prothesenzähne (2) der Dentalprothese (10) parallel zueinander ausgerichtete Wurzeln (7) aufweisen, die in passenden parallel zueinander ausgerichteten Zahnfächern (9) der Prothesenbasis (8) befestigt sind, insbesondere eingeklebt sind.

13. Dentalprothese (10) nach Anspruch 12, **dadurch gekennzeichnet, dass**
die mit der Prothesenbasis (8) verbundenen vorkonfektionierten Prothesenzähne (2) an der Okklusionsfläche, vorzugsweise an der gesamten koronalen Seite (3), nicht oder nur unwesentlich manuell nachbearbeitet sind.

14. Vorrichtung oder Kombination von Vorrichtungen zum Durchführen eines Verfahrens nach einem der Ansprüche 1 bis 11, umfassend zumindest eine CAM-Vorrichtung (26, 28) und einen Computer (12) zur Berechnung der virtuellen Modelle und zur Steuerung einer ersten CAM-Vorrichtung (26) zum Bearbeiten der basalen Seiten (4) der Prothesenzähne (2) und zur Steuerung der ersten CAM-Vorrichtung (26) oder einer zweiten CAM-Vorrichtung (28) zum Herstellen der Prothesenbasis (8).

15. Vorrichtung oder Kombination von Vorrichtungen nach Anspruch 14, **dadurch gekennzeichnet, dass**
die Vorrichtung oder die Kombination von Vorrichtungen zumindest eines der folgenden Module umfasst:
ein Dentalprothesenberechnungsmodul (20) zur Berechnung eines virtuellen dreidimensionalen Dentalprothesen-Modells aus den Daten der Mundraumsituation eines Patienten (18),
ein Wurzelberechnungsmodul (22) zur Berechnung einer Grenzfläche zwischen einem virtuellen dreidimensionalen Modell der Prothesenbasis (8) und zumindest einem virtuellen dreidimensionalen Modell der Prothesenzähne (2), wobei das Wurzelberechnungsmodul (22) derart programmiert ist, dass zu jeder virtuellen dreidimensionalen Form jedes Prothesenzahns (2) des zumindest einen Modells der Prothesenzähne (2) eine basale Wurzel (7) als Teil der Grenzfläche berechnet wird, wobei die basalen Wurzeln (7) parallel zueinander ausgerichtet sind, und
ein File-Splitting-Modul (24) zur rechnerischen Trennung eines virtuellen dreidimensionalen Dentalprothesen-Modells in ein virtuelles dreidimensionales Modell der Prothesenbasis (8) und zumindest ein virtuelles dreidimensionales Modell der Prothesenzähne (2).

## Claims

1. A method for producing a dental prosthesis (10), wherein the dental prosthesis (10) has a prosthetic base (8) and several prosthetic teeth (2), wherein
the method is conducted using a virtual three-dimensional dental prosthesis model of the physical dental prosthesis (10) to be produced, and wherein
the virtual three-dimensional model of the dental prosthesis is divided into at least one virtual three-dimensional model of the prosthetic teeth (2) and one virtual three-dimensional model of the prosthetic base (8), or comprises at least one virtual three-dimensional model of the prosthetic teeth (2) and one virtual three-dimensional model of the prosthetic base (8), wherein
the boundary area between the virtual model of the prosthetic teeth (2) and the virtual model of the prosthetic base (8) is computed such that the prosthetic teeth (2) in the virtual model have roots (7) that are aligned parallel to each other and the prosthetic base (8) in the virtual model has tooth sockets (9) that are aligned parallel to each other, wherein the tooth sockets (9) form a negative shape of the roots (7) of the prosthetic teeth (2), having the following steps:
A) Affixing several prefabricated prosthetic teeth (2) for the production of the dental prosthesis (10) in a supporting means (5) or Providing several prefabricated prosthetic teeth (2) for the production of the dental prosthesis (10) being affixed in a supporting means (5);
B) Producing the prosthetic base (8) according to the virtual model of the prosthetic base (8) with a CAM method, wherein in the prosthetic base (8), tooth sockets (9) are created that lie parallel to each other; **characterized by** the further steps
C) Processing the prosthetic teeth (2) basally and adjacent cervically while held in the supporting means (5) in accordance with the virtual model of the prosthetic teeth (2) using a CAM method, so that cylindrical axes of cylindrical or approximately cylindrical generated roots (7) of the prosthetic teeth (2) and/or conical axes of conical and/or truncated conical or approximately conical and/or truncated conical generated roots (7) of the prosthetic teeth (2) produced lie parallel to each other when the prosthetic teeth (2) are inserted into the prosthetic base (8), and so that the roots (7) have a symmetry axis (B) that corresponds to the insertion direction into the tooth sockets (9) of the prosthetic base (8), or at least largely corresponds to the insertion direction into the tooth sockets (9) of the prosthetic base (8);
D) Inserting the processed prosthetic teeth (2) together or in groups into the tooth sockets (9) of the prosthetic base (8) and attaching the processed prosthetic teeth (2) in the tooth sockets (9).

2. The method according to Claim 1, **characterized in that**
the prefabricated prosthetic teeth (2) in step A) are affixed to each other in a supporting means (5) in a position and location in which the coronal sides (3) of the prosthetic teeth (2) correspond to the location and alignment of the prosthetic teeth (2) in relation to each other in the virtual dental prosthesis model.

3. The method according to Claim 1 or 2, **characterized in that**
in step C), the prefabricated prosthetic teeth (2) are attached for processing in the supporting means (5) in a CAM device (26), in particular in a computer-controlled mill (26) as a CAM device.

4. The method according to any one of the preceding claims, **characterized in that**
in step D), the prosthetic teeth (2) affixed and processed in the supporting means (5) are inserted into the prosthetic base (8) and in step D) or at a time after step D), the supporting means (5) is removed after the processed prosthetic teeth (2) have been inserted into the prosthetic base (8).

5. The method according to any one of the preceding claims, **characterized in that**
the virtual three-dimensional dental prosthesis model is separated computationally by means of file-splitting into the at least one virtual three-dimensional model of the prosthetic teeth (2) and the virtual three-dimensional model of the prosthetic base (8), and/or
when computing the boundary area between the at least one virtual model of the prosthetic teeth (2) and the virtual model of the prosthetic base (8), the surfaces of the computed roots (7) of the virtual models of the prosthetic teeth (2) are disposed the virtual surface of the unprocessed prefabricated prosthetic teeth or the entire boundary area is disposed within the virtual surface of the unprocessed prefabricated prosthetic teeth (2).

6. The method according to any one of the preceding claims, **characterized in that**
from the external form of occlusal surfaces of the prosthetic teeth (2) or from the external form of cervical surfaces of the coronal side (3) of the prosthetic teeth (2) and occlusal surfaces of the prosthetic teeth (2) of the virtual three-dimensional dental prosthesis model, a virtual model of the supporting means (5) is computed, so that an area of the virtual surface of the virtual supporting means (5) is formed by a negative of the occlusal surfaces or of the occlusal and cervical surfaces of the prosthetic teeth (2), wherein the location and orientation of the prosthetic teeth (2) relative to each other remains the same in the negative, wherein the physical supporting means (5) is produced with a CAM method on the basis of the data of the virtual model of the supporting means (5) and the physical prosthetic teeth (2) are placed on and attached to the supporting means (5), wherein the occlusal surfaces or the occlusal and cervical surfaces of the prosthetic teeth (2) are placed onto the surface of the supporting means (5) that is formed as a matching negative.

7. The method according to any one of the preceding claims, **characterized in that**
the virtual three-dimensional dental prosthesis model is produced on the basis of an intraoral scan or of a scan of an imprint of the oral cavity condition of the patient (18) in order to shape the virtual prosthetic base (8) and by means of a virtual positioning of virtual models of the prefabricated prosthetic teeth (2) in the virtual prosthetic base (8), wherein preferably, the form, location and/or orientation of the prosthetic teeth (2) is selected by means of a simulation of the location of the dental prosthesis (10) in the oral cavity of the patient (18) and/or by means of a simulation of the location and orientation of the prosthetic teeth (2) in relation to each other and/or in relation to the prosthetic base (8), wherein in a particularly preferred manner, the occlusion plane and/or the chewing movements of the jaw are simulated.

8. The method according to any one of the preceding claims, **characterized in that**
in step C), the prosthetic teeth (2) are basally ablated and on the basal side (4) cervically ablated, based on the virtual model of the prosthetic teeth (2) using the CAM method, preferably milled off with a computer-controlled milling machine (26, 28), and/or
in order to compute the virtual dental prosthesis model, data that is already available on the external form of known prefabricated prosthetic teeth (2) is used.

9. The method according to any one of the preceding claims, **characterized in that**
for at least one of the processed prosthetic teeth (2), the symmetry axis (B) of the roots (7) is inclined against the axis (A) of the coronal sides (3) of the prosthetic teeth (2), preferably incline by at least 0.5°, particularly preferably inclined by at least 2°.

10. The method according to any one of the preceding claims, **characterized in that** the supporting means (5) is a silicone key, a matrix, a wax or an occlusion plate.

11. The method according to any one of the preceding claims, **characterized in that** the prosthetic teeth (2), in a single work step, are connected simultaneously and together with the prosthetic base (8).

12. A dental prosthesis (10) produced using a method according to any one of the preceding claims, wherein several prosthetic teeth (2) or all prosthetic teeth (2) of the dental prosthesis (10) have roots (7) that are aligned parallel to each other, which are attached in matching tooth sockets (9), which are aligned parallel to each other, on the prosthetic base (8), in particular are glued in.

13. The dental prosthesis (10) according to Claim 12, **characterized in that**
the prefabricated prosthetic teeth (2) connected to the prosthetic base (8) on the occlusion area, preferably on the entire coronal side (3) are not or are only marginally post-processed.

14. A device or combination of devices for conducting a method according to any one of claims 1 to 11, comprising at least one CAM device (26, 28) and a computer (12) for computing the virtual models and for controlling a first CAM device (26) for processing the basal sides (4) of the prosthetic teeth (2) and for controlling the first CAM device (26) or a second CAM device (28) for producing the prosthetic base (8).

15. The device or combination of devices according to Claim 14, **characterized in that** the device or combination of devices comprises at least one of the following modules:
A dental prosthesis computing module (20) for computing a virtual three-dimensional dental prosthesis model from the data of the oral cavity condition of a patient (18),
a root computing module (22) for computing a boundary area between a virtual three-dimensional model of the prosthetic base (8) and at least one virtual three-dimensional model of the prosthetic teeth (2), wherein the root computing module (22) is programmed such that for each virtual three-dimensional form of each prosthetic tooth (2) of the at least one model of the prosthetic teeth (2), a basal root (7) is computed as part of the boundary area, wherein the basal roots (7) are aligned parallel to each other, and
a file-splitting module (24) for the computational separation of a virtual three-dimensional dental prosthesis model into a virtual three-dimensional model of the prosthetic base (8) and at least one virtual three-dimensional model of the prosthetic teeth (2).

## Revendications

1. Procédé de fabrication d'une prothèse dentaire (10), dans lequel la prothèse dentaire (10) présente une base de prothèse (8) et plusieurs dents prothétiques (2), le procédé ayant lieu moyennant l'emploi d'un modèle de prothèse dentaire tridimensionnel virtuel de la prothèse dentaire physique (10) à créer et dans lequel le modèle de prothèse dentaire tridimensionnel virtuel est subdivisé en au moins un modèle tridimensionnel virtuel des dents prothétiques (2) et un modèle tridimensionnel virtuel de la base de prothèse (8), ou comprend au moins un modèle tridimensionnel virtuel des dents prothétiques (2) et un modèle tridimensionnel virtuel de la base de prothèse (8), dans lequel
l'interface entre le modèle virtuel des dents prothétiques (2) et le modèle virtuel de la base de prothèse (8) est calculée de telle manière que les dents prothétiques (2) dans le modèle virtuel présentent des racines (7) orientées parallèlement les unes par rapport aux autres et la base de prothèse (8) présente des alvéoles dentaires (9) orientées parallèlement dans le modèle virtuel, où les alvéoles dentaires (9) forment un négatif des racines (7) des dents prothétiques (2), présentant les étapes suivantes :
A) plusieurs dents prothétiques (2) préconfectionnées vont être ou sont fixées dans un système de maintien (5) pour la fabrication de la prothèse dentaire (10) ;
B) la base de prothèse (8) est créée de manière correspondante au modèle virtuel de la base de prothèse (8) avec un procédé de FAO, dans lequel des alvéoles dentaires (9) sont créées dans la base de prothèse (8) qui se situent parallèles les unes par rapport autres ; **caractérisé par** les autres étapes
C) les dents prothétiques (2) sont façonnées dans le système de maintien (5) de manière basale et de manière cervicale à cet endroit conformément au modèle virtuel des dents prothétiques (2) avec un procédé de FAO, de sorte que des axes de cylindres de racines (7) cylindriques ou à peu près cylindriques créées des dents prothétiques (2), et/ou des axes de cônes de racines (7) en forme de cônes et/ou en forme de cônes tronqués ou à peu près en forme de cônes, et/ou en forme de cônes tronqués créées des dents prothétiques (2) se situent parallèles les uns par rapport aux autres lorsque les dents prothétiques (2) sont insérées dans la base de prothèse (8), et de sorte que les racines (7) présentent un axe de symétrie (B) qui correspond à la direction d'insertion dans les alvéoles dentaires (9) de la base de prothèse (8), ou correspond au moins dans les grandes lignes à la direction d'insertion dans les alvéoles dentaires (9) de la base de prothèse (8) ;
D) les dents prothétiques (2) façonnées sont implantées ensemble ou par groupes dans les alvéoles dentaires (9) de la base de prothèse 8) et y sont fixées.

2. Procédé selon la revendication 1, **caractérisé en ce que**
les dents prothétiques (2) préconfectionnées dans l'étape A) sont fixées dans un système de maintien (5) dans une position et un emplacement les unes par rapport aux autres, dans lesquels les faces coronales (3) des dents prothétiques (2) correspondent à l'emplacement et à l'orientation des dents prothétiques (2) les unes par rapport aux autres dans le modèle de prothèse dentaire virtuel.

3. Procédé selon la revendication 1 ou la revendication 2, **caractérisé en ce que**
dans l'étape C), les dents prothétiques (2) préconfectionnées sont fixées pour le façonnage avec le système de maintien (5) dans un dispositif de FAO (26), en particulier, dans une fraise (26) commandée par ordinateur servant de dispositif de FAO.

4. Procédé selon l'une des revendications précédentes, **caractérisé en ce que**
dans l'étape D), les dents prothétiques (2) fixées et façonnées dans le système de maintien (5) sont implantées dans la base de prothèse (8) et le système de maintien est enlevé dans l'étape D), ou peu de temps après l'étape D), après que les dents prothétiques (2) façonnées aient été implantées dans la base de prothèse (8).

5. Procédé selon l'une des revendications précédentes, **caractérisé en ce que**
le modèle de prothèse dentaire tridimensionnel virtuel est subdivisé par un calcul au moyen d'un fractionnement du fichier en l'au moins un modèle tridimensionnel virtuel des dents prothétiques (2) et en un modèle tridimensionnel virtuel de la base de prothèse (8), et/ou
les surfaces des racines (7) calculées des modèles virtuels des dents prothétiques (2), ou l'interface totale à l'intérieur de la surface virtuelle des dents prothétiques (2) préconfectionnées non façonnées sont agencées lors du calcul de l'interface entre l'au moins un modèle virtuel des dents prothétiques (2) et le modèle virtuel de la base de prothèse (8).

6. Procédé selon l'une des revendications précédentes, **caractérisé en ce qu'**à partir de la forme extérieure de surfaces occlusales des dents prothétiques (2) ou à partir de la forme extérieure de surfaces cervicales de la face coronale (3) des dents prothétiques (2) et de surfaces occlusales des dents prothétiques (2) du modèle de prothèse dentaire tridimensionnel virtuel, un modèle virtuel du système de maintien (5) est calculé de sorte qu'une zone de la surface virtuelle du système de maintien (5) virtuel est formé par un négatif des surfaces occlusales ou des surfaces occlusales et cervicales des dents prothétiques (2), où la position et l'orientation des dents prothétiques (2) les unes par rapport aux autres restent conservées dans le négatif, où le système de maintien (5) physique est fabriqué avec un procédé de FAO à l'aide des données du modèle virtuel du système de maintien (5) et les dents prothétiques (2) physiques sont apposées et fixées sur le système de maintien (5), où les surfaces occlusales ou les surfaces occlusales et cervicales des dents prothétiques (2) sont apposées sur la surface du système de maintien (5) sous forme de négatif adéquat.

7. Procédé selon l'une des revendications précédentes, **caractérisé en ce que** le modèle de prothèse dentaire tridimensionnel virtuel est créé sur la base d'un balayage intra-oral ou d'un balayage d'une empreinte de la situation de l'espace buccal chez le patient (18) pour la conception de la forme de la base de prothèse (8) virtuelle et par une représentation virtuelle de modèles virtuels des dents prothétiques (2) préconfectionnées dans la base de prothèse (8) virtuelle, dans lequel, de préférence, la forme, la position et/ou l'orientation des dents prothétiques (2) sont choisies par une simulation de la position de la prothèse dentaire (10) dans l'espace buccal du patient (18) et/ou par une simulation de la position et de l'orientation des dents prothétiques (2) les unes par rapport aux autres, et/ou par rapport à la base de prothèse (8), où, de manière particulièrement préférée, le plan occlusal et/ou les mouvements de masticage du maxillaire sont simulés.

8. Procédé selon l'une des revendications précédentes, **caractérisé en ce que** dans l'étape C), les dents prothétiques (2) sont élimées de manière cervicale sur leur côté basal (4) avec un procédé de FAO, en se basant sur le modèle virtuel des dents prothétiques (2), sont élimées par fraisage, de préférence avec une fraise (26, 28) commandée par ordinateur, et/ou des données déjà présentes pour la forme extérieure de dents prothétiques (2) préconfectionnées connues sont employées pour le calcul du modèle de prothèse dentaire virtuel.

9. Procédé selon l'une des revendications précédentes, **caractérisé en ce que** l'axe de symétrie (B) des racines (7) est incliné vers l'axe (A) des faces coronales (3) des dents prothétiques (2) pour au moins une des dents prothétiques (2) façonnée, de préférence incliné d'au moins 0,5 °, de manière particulièrement préférée incliné d'au moins 2 °.

10. Procédé selon l'une des revendications précédentes, **caractérisé en ce que** le système de maintien (5) est une clé en silicone, une clé de dentisterie, une plaque de cire ou une plaque occlusale.

11. Procédé selon l'une des revendications précédentes, **caractérisé en ce que** les dents prothétiques (2) sont reliées simultanément et ensemble avec la base de prothèse (8) en une seule étape de travail.

12. Prothèse dentaire (10) fabriquée avec un procédé selon l'une des revendications précédentes, dans laquelle plusieurs dents prothétiques (2) ou toutes les dents prothétiques (2) de la prothèse dentaire (10) présentent des racines (7) orientées parallèlement les unes par rapport aux autres, qui sont fixées, notamment collées, dans des alvéoles dentaires (9) de la base de prothèse (8) correspondantes, orientées parallèlement les unes par rapport aux autres.

13. Prothèse dentaire (10) selon la revendication 12, **caractérisée en ce que** les dents prothétiques (2) préconfectionnées reliées avec la base de prothèse (8) ne sont pas, ou uniquement à peine, refaçonnées manuellement sur la surface occlusale, de préférence sur la face coronale (3) complète.

14. Dispositif ou combinaison de dispositifs permettant de réaliser un procédé selon l'une des revendications 1 à 11, comprenant au moins un dispositif de FAO (26, 28) et un ordinateur (12) pour le calcul des modèles virtuels et pour la commande d'un premier dispositif de FAO (26) permettant de façonner les faces basales (4) des dents prothétiques (2) et permettant la commande du premier dispositif de FAO (26) ou d'un deuxième dispositif de FAO (28) pour la fabrication de la base de prothèse (8).

15. Dispositif ou combinaison de dispositifs selon la revendication 14, **caractérisé en ce que** le dispositif ou la combinaison de dispositifs comprend au moins l'un des modules suivants :
un module de calcul de prothèse dentaire (20) permettant le calcul d'un modèle de prothèse dentaire tridimensionnel virtuel à partir des données de la situation de l'espace buccal d'un patient (18),
un module de calcul de racine (22) permettant le calcul d'une interface entre un modèle tridimensionnel virtuel de la base de prothèse (8) et au moins un modèle tridimensionnel virtuel des dents prothétiques (2), où le module de calcul de racine (22) est programmé de telle manière que, pour chaque forme tridimensionnelle virtuelle de chaque dent prothétique (2) de l'au moins un modèle des dents prothétiques (2), une racine (7) basale est calculée en tant que partie de l'interface, où les racines (7) basales sont orientées parallèles les unes par rapport aux autres, et
un module de fractionnement de fichiers (24) permettant la subdivision par calcul d'un modèle de prothèse dentaire tridimensionnel virtuel en un modèle tridimensionnel virtuel de la base de prothèse (8) et au moins un modèle tridimensionnel virtuel des dents prothétiques (2).
